# EUROPEAN PATENT SPECIFICATION

(11) **EP 4 114 899 B1**
(45) Date of publication and mention of the grant of the patent: **03.04.2024**
(21) Application number: 21709399.6
(22) Date of filing: 02.03.2021
(51) Int. Cl.: C08L 63/00, H01B 1/24

(54) **MULTIFUNCTIONAL SELF-HEALING COMPOSITE MATERIAL FOR AERONAUTICS APPLICATIONS**
MULTIFUNKTIONELLES SELBSTHEILENDES VERBUNDMATERIAL FÜR ANWENDUNGEN IN DER LUFTFAHRT
MATÉRIAU COMPOSITE AUTO-CICATRISANT MULTIFONCTIONNEL POUR APPLICATIONS AÉRONAUTIQUES

(30) Priority: 02.03.2020 IT 202000004318
(43) Date of publication of application: 11.01.2023
(73) Proprietor: Leonardo S.p.A., 00195 Roma (IT)
(72) Inventor: GUADAGNO, Liberata, 84084 FISCIANO (Salerno) (IT); NADDEO, Carlo, 84098 PONTECAGNANO FAIANO (Salerno) (IT); VERTUCCIO, Luigi, 84085 MERCATO SAN SEVERINO (Salerno) (IT); CALABRESE, Elisa, 84133 SALERNO (IT); BARRA, Giuseppina, 84121 SALERNO (IT); RAIMONDO, Marialuigia, 84025 EBOLI (Salerno) (IT); RUSSO, Salvatore, 80010 QUARTO (Napoli) (IT); IANNUZZO, Generoso, 83100 AVELLINO (IT)
(74) Representative: Aseglio-Gianinet, Romina
(86) International application number: PCT/EP2021/055088
(87) International publication number: WO 2021/175799

(56) References cited:
- WO-A1-2009/113205
- LIBERATA GUADAGNO ET AL: "Development of aeronautical epoxy nanocomposites having an integrated selfhealing ability", MATEC WEB OF CONFERENCES, vol. 233, 1 January 2018 (2018-01-01), page 00021, XP055745155, DOI: 10.1051/matecconf/201823300021

## Description

The present invention relates to the development of multifunctional self-healing supramolecular systems aimed to integrate auto-repair mechanisms in structural materials and able to contrast the insulating property of polymers, in particular epoxy polymers.

Recently, in the field of auto-repair thermosetting materials suitable to be applied as structural materials, alternative strategies to the microencapsulated systems have been proposed [Guadagno et al. - Reversible self-healing carbon-based nanocomposites for structural applications Polymers- Volume 11, Issue 5, 1 May 2019, Article number 903] [Guadagno et al. - Self-healing epoxy nanocomposites via reversible hydrogen bonding - Composites Part B: Engineering Volume 157, 15 January 2019, Pages 1-13 [Guadagno et al. - Development of aeronautial epoxy nanocomposites having an integrated self-healing ability, MATEC Web of Conferences 233, 00021, 2018].

In this new approach, chain dynamics and principles of polymeric physics are an important aspect for the design of self-healing structural polymer. In order to design materials with dynamic properties, MWCNTs were functionalized with thymine (MWCNT-t) and barbituric (MWCNT-b) acid-based ligands via copper(I)-catalyzed alkyne/azide cycloaddition (CuAAC) "click" reaction. The functionalized carbon nanotubes (MWCNT-t and MWCNT-b) have been embedded through sonication in an aeronautical epoxy formulation toughened via the reaction between epoxy groups of tetraglycidyl methylene dianiline (TGMDA) and COOH groups of a liquid rubber carboxyl-terminated butadiene acrylonitrile (CTNB).

The performed functionalization is responsible for MWCNTs-bridges through the epoxy matrix due to strong attractive interactions between the rubber phase and MWCNT walls. For both functional groups, barbiturate and thymine-based moieties, self-healing efficiencies higher than 50% have been found. Hardener and components employed to design the self-healing nanocomposites are typical of load-bearing structures and therefore, suitable to formulate self-healing materials preserving the characteristics of mechanical properties of highly performant structures.

In particular, in the previous developed systems, mechanisms based on hydrogen bonding have been developed. Such mechanisms are activated because of hydrogen bonding moieties covalently bonded to MWCNTs. It has been demonstrated that the functionalization of carbon nanotubes determines an increase in the EPT [Guadagno et al. - Reversible self-healing carbon-based nanocomposites for structural applications Polymers- Volume 11, Issue 5, 1 May 2019, Article number 903]

An object of the present invention is providing auto-repair composite materials which are improved in respect of the ones belonging to the prior art.

The above-captioned object is attained by a material according to claim 1 which follows. Preferred materials according to the invention are disclosed in the dependent claims.

Preferred nanocomposites according to the present invention are based on molecules acting as self-healing agents and Multiwall Carbon Nanotubes (MWCNTs), which allow reaching the Electrical Percolation Threshold (EPT) at a lower amount of nanofiller. In particular, no functionalization of MWCNTs is required with relevant advantages for possible industrialization processes.

Composite materials according to the invention incorporate unfunctionalized MWCNTs or other nanostructured forms of carbon such as expanded or exfoliated graphites or graphene-based nanoparticles (able to preserve the electrical characteristic) and compounds/molecules having in their structure groups able to act as donor and acceptor of hydrogen bonds. These compounds/molecules are compatible with the hosting polymer matrices and are capable to form strong attractive interactions with the matrix. They are characterized by the intrinsic potentiality to easily create cumulative effects of the reversible interactions based on hydrogen bonding in the matrix, in particular epoxy matrix, networks.

This solution allows to obtain multifunctional self-healing materials with polymer matrix, in particular epoxy matrix, which are able to manifest high healing efficiency combined with enhanced electrical properties and good possibility to integrate self-responsive functions based on the electrical performance of the material such as self-sensing, de-icing and/or anti/icing based on the joule effect of the current running through the composite material.

According to the invention, the incorporation of MWCNTs (or other structured forms of carbon) into the polymer matrix is an essential prerequisite to confer electrical conductivity to the material. In fact, the dispersion of CNTs or graphene-based nanoparticles in the matrix results in a significant increase in electrical conductivity. In the presence of Carbon Fiber Reinforced Composites, which are already electrically conductive, the self-healing materials of the invention can also be used without conductive fillers. However, the presence of the nanofiller can be beneficial also to increase the amount of interphase (e.g. epoxy matrix in contact with the CNT walls or graphene layers). For many materials, the presence of this interphase is not only able to mitigate micro-crack formation, but it is also useful to create a synergic effect with the self-healing fillers.

Accordingly, caomposite matrials according to the present invention are quite suitable for applications in aeronautical structures.

Further advantages and features of the present invention will be apparent from the following de-tailed description, provided in a non-limiting way with reference to the following examples and drawings, wherein:
figure 1 illustrates the chemical formulae of exemplary polymer matrices of a material according to the invention;
figure 2 illustrates the chemical formulae of components of an epoxy matrix of a material according to the invention;
figure 3 illustrates TDCB geometry and dimensions (in mm) of specimens used for self-healing efficiency evaluation;
figure 4 is a photography illustrating an equipment used for self-healing efficiency evaluation;
figure 5 is a diagram illustrating Load-Displacement curves for the sample TCTBD+0.5%MWCNT+1% 1.3 DBA;
figure 6 is a diagram illustrating Loss factor (tan δ) curves of the epoxy formulations TCTBD, TCTBD+0.5%MWCNT and TCTBD+0.5%MWCNT+1% 1.3 DBA;
figures 7a and 7b are diagrams illustrating TGA curves of the cured epoxy formulations TCTBD, TCTBD+0.5%MWCNT and TCTBD+0.5%MWCNT+1% 1.3 DBA, in air (a) and in nitrogen flow (b), respectively;
figure 8 is a diagram illustrating Load-Displacement curves for the sample TCTBD+0.5%MWCNT+1% 2T;
figure 9 is a diagram illustrating Loss factor curves (tan δ) of the epoxy formulations TCTBD, TCTBD+0.5%MWCNT and TCTBD+0.5%MWCNT+1% 2T;
figures 10a and 10b are diagrams illustrating TGA curves of the cured epoxy formulations TCTBD, TCTBD+0.5%MWCNT and TCTBD+0.5%MWCNT+1% 2T, in air and (a) and nitrogen flow (b), respectively;
figure 11 is a diagram illustrating Load-Displacement curves for the sample TCTBD+0.5%MWCNT+1% M;
figure 12 is a diagram illustrating Loss factor (tan δ) of the epoxy formulations TCTBD, TCTBD+0.5%MWCNT and TCTBD+0.5%MWCNT+1% M;
figures 13a and 13b are diagrams illustrating TGA curves of the cured epoxy formulations TCTBD, TCTBD+0.5%MWCNT and TCTBD+0.5%MWCNT+1% M, in air (a) and nitrogen flow (b), respectively;
figure 14 is a diagram illustrating Load-Displacement curves for the sample TCTBD+0.5%MWCNT+1% 5.9ABA;
figures 15a and 15b are diagrams illustrating TGA curves of the cured epoxy formulations TCTBD, TCTBD+0.5%MWCNT and TCTBD+0.5%MWCNT+1% 5.9 ABA, in air (a) and nitrogen flow (b), respectively;
figure 16 is a diagram illustrating Load-Displacement curves for the sample PCTH+0.42% 1.3DBA;
figure 17 is a diagram illustrating Load-Displacement curves for the sample PCTH+0.42% 2T;
figure 18 is a diagram illustrating Load-Displacement curves for the sample PCTH+0.42% M; and
figure 19 illustrates the chemical formulae of analyzed molecules.

### Self-healing molecular fillers

Illustrative, not-limiting examples of self-healing molecular fillers, containing peculiar functional groups, able to establish reversible non-covalent bonds among themselves and with the polymer matrix are:

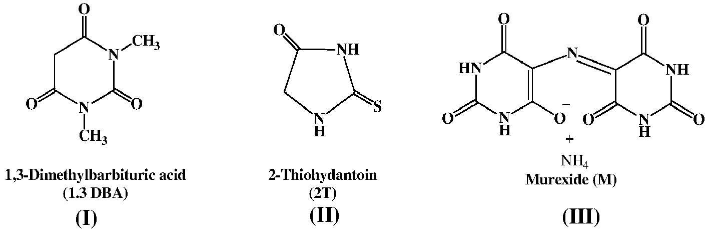

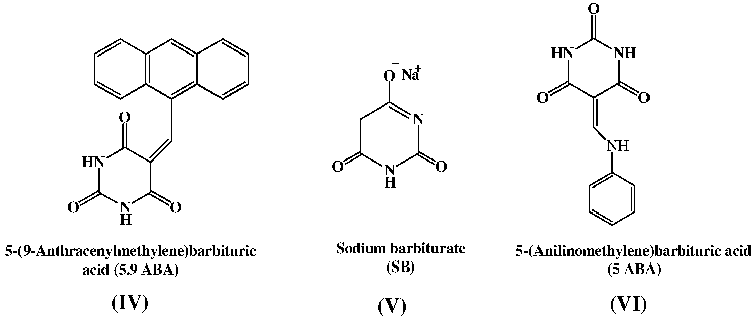

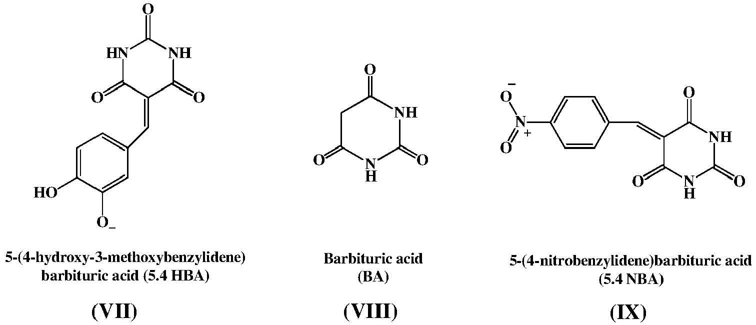

The structure of the molecules/compounds acting as molecular fillers was chosen considering their peculiar property to activate interactions with the matrix, in particular an epoxy matrix, through the formation of reversible hydrogen bonds, generating a supramolecular network with the intrinsic property to repair the epoxy network after damages.

The above-listed self-healing molecular fillers are commercially available, but molecules specifically synthetized with structural characteristic similar to those above described are within the scope of the present invention. In particular, the structure of these molecules must simultaneously contain groups acting as donor and acceptor of hydrogen bonds. If the matrix is a thermosetting epoxy resin, the structure can also contain only "acceptor" groups due to the large amount of -OH groups in the cured epoxy matrix.

### Polymeric Matrix

The polymeric matrix to be used according to the present invention can be an epoxy matrix (for example epoxy matrices based on tetrafunctional, trifunctional, bifunctional epoxy precursors or mixtures of them). Aliphatic or aromatic amines (primary, secondary, tertiary or mixtures of them) or several anhydrides can be chosen as hardener agent/mixture. The polymer matrix can also be different from an epoxy matrix, provided it presents polar groups in the structure, among which O-H, N-H, both O-H and N-H, F-H and so on.

The molecular self-healing fillers can also be added to toughened epoxy matrices.

The polymeric matrix can also be a thermoplastic matrix having polar groups (-OH, -NH and so on) or "acceptor" groups or functionalized in such a way to present polar group in the structure.

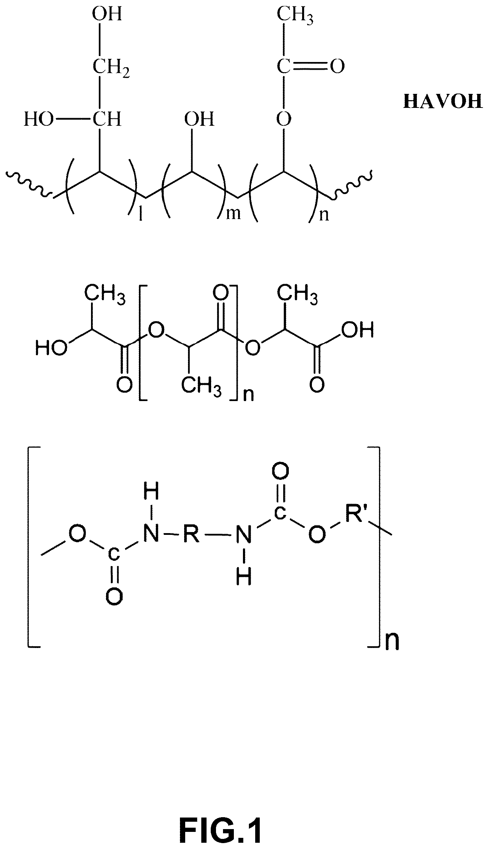

Chemical formulae of exemplary polymeric matrices of a material according to the invention are illustrated in figure 1.

### Preparation of epoxy matrix formulation A -Components

This matrix is composed of: a) the terafunctional epoxy precursor tetraglycidylmethylenedianiline (TGMDA); b) the epoxy reactive diluent 1,4 butanedioldiglycidyl ether (BDE); c) the curing agent 4,4- diaminodiphenyl sulfone (DDS); d) the rubber phase, carboxyl-terminated butadiene acrylonitrile copolymer (CTBN) [Vertuccio, L., Guadagno, L., Spinelli, G., Russo, S. and Iannuzzo, G. (2017). Effect of carbon nanotube and functionalized liquid rubber on mechanical and electrical properties of epoxy adhesives for aircraft structures. Composites Part B, 129, 1-10.]. This epoxy matrix is named TCTBD sample.

### Preparation of the unfilled epoxy matrix A - (Sample 1A)

The epoxy mixture TCTBD was obtained by mixing the epoxy precursor tetraglycidyl methylene dianiline (TGMDA) with 12.5 phr of carboxyl-terminated butadiene acrylonitrile (CTBN) and 10 phr of the catalyst triphenylphosphine (PPh₃). This mixture was heated at 170°C, using an oil bath and mechanical agitation promoted by an electric stirrer, for 24 h. The triphenylphosphine is used as a pre-reaction catalyst to promote the reaction between the epoxy groups and the carboxylic acid groups of the CTNB copolymer. In the first step, the nucleophilic attack by triphenylphosphine on the carbon of the oxirane ring causes its opening, producing then a phosphonium salt. In the second step, the carboxylic anion reacts with the electrophilic carbon attached to the positive phosphorus, regenerating the catalyst PPh₃ and producing the TCT modified precursor [Vertuccio, L., Guadagno, L., Spinelli, G., Russo, S. and Iannuzzo, G. (2017). Effect of carbon nanotube and functionalized liquid rubber on mechanical and electrical properties of epoxy adhesives for aircraft structures. Composites Part B, 129, 1-10.].

The obtained TCT was cooled at 120°C and the reactive epoxy diluent 1,4-butanedioldiglycidylether (BDE) was added at a concentration TGMDA/BDE of 80%:20% by wt, obtaining the mixture TCTB. An amount of curing agent 4,4'-diaminodiphenyl sulfone (DDS) of 55 phr with respect to precursor TGMDA was added to the mixture TCTB to activate the curing reactions, obtaining the epoxy mixture TCTBD. The epoxy TCTBD was mixed at 120°C for 1 h and was degassed afterwards in vacuum at 100 °C for 1 h. The mixture was cured by a two-stage curing cycle: a first isothermal stage at the lower temperature of 125°C for 1 h followed by a second isothermal stage at higher temperatures. This second step can be performed a 180° or 200°C (for example at 200°C for 3 h).

### Preparation of the self-healing multifunctional epoxy matrix A (Epoxy mixture TCTBD+0.5% MWCNT+1% self-healing filler) - (Sample 2A)

The epoxy mixture was obtained as previously described by mixing the epoxy precursor TGMDA with 12.5 phr of CTBN and 10 phr of the catalyst triphenylphophine. This mixture was heated at 170°C, using an oil bath and mechanical agitation promoted by an electric stirrer, for 24 h. The TCT blend was cooled at 120°C and the reactive epoxy diluent was added at a concentration TGMDA/BDE of 80%:20% by wt. Then the self-healing fillers were added at a concentration of 1% by weight with respect to the mixture TCTBD and the epoxy blend was mixed at 120°C for 30 min. An amount of curing agent DDS of 44.4 phr with respect to precursor (TGMDA) was added to activate the curing reactions. The Epoxy blend TCTBD+1% self-healing filler was mixed at 120°C for 1 h and, after this time, the blend was degassed in vacuum at 100°C for 1 h. The mixture was cured by a two-stage curing cycle: a first isothermal stage at the lower temperature of 125°C for 1 h followed by a second isothermal stage at the higher temperature of 200°C for 3 h.

### Preparation of epoxy matrix formulation B - Components

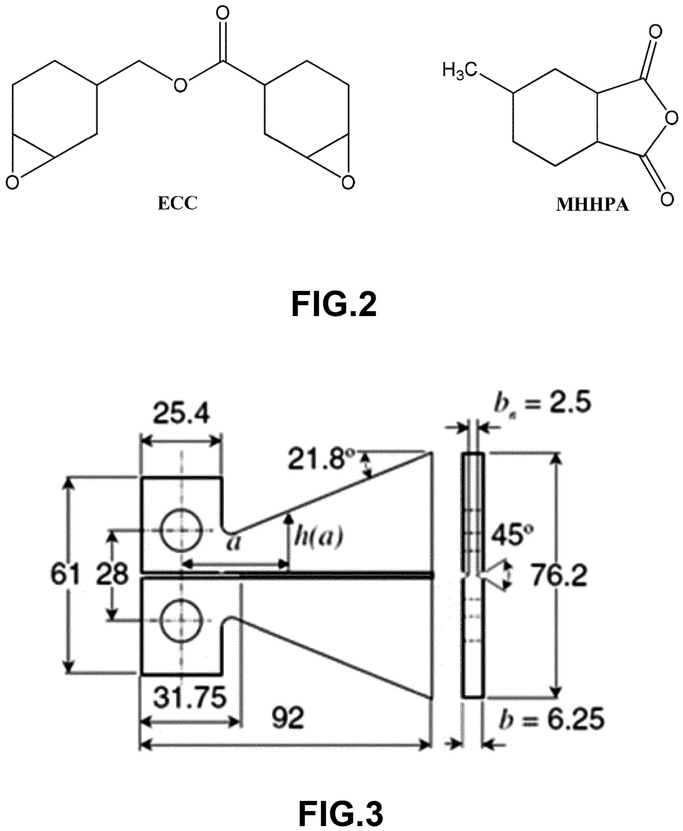

The epoxy polymer is composed of: a) the precursor 3,4-Epoxycyclohexylmethyl-3',4'-epoxycyclohexane carboxylate" (ECC) (see formula in figure 2); b) the hardener Methyl hexahydrophthalic anhydride" (MHHPA) (see formula in figure 2); c) the rubber phase, carboxyl-terminated butadiene acrylonitrile copolymer (CTBN).

The rubber phase, carboxyl-terminated butadiene acrylonitrile copolymer was purchased from Hycar-Reactive Liquid Polymers. It is characterized by a Mn = 3600 containing terminal carboxy groups (COOH content of 0.67×10⁻³ equiv/g of CTBAC and 18 w/w% of CN).

All the components, except for the carboxyl-terminated butadiene acrylonitrile copolymer, were purchased from Sigma-Aldrich Company and were reagent of grade quality. These products were used without any further purification.

This epoxy matrix is named PCTH sample.

### Preparation of the unfilled epoxy matrix B - (Sample 1B)

The epoxy mixture PCTH was obtained by adding the liquid rubber CTBN, at a concentration of 5% by wt. with respect to the total weight of all the mixture components, to the precursor ECC, kept in an oil bath at 100°C. After having homogeneously mixed the two components for about 10 minutes, the triphenylphosphine PPh₃ was added at a concentration of 10% by wt. with respect to the total weight of all the mixture components, and the temperature was raised up to 160° C. The triphenylphosphine promotes the reaction between the oxirane rings of the epoxy precursor and the carboxylic groups of the liquid rubber. The resulting mixture was kept at 160°C for about 20 hours, under magnetic stirring in an oil bath. After 20 hours, the obtained mixture was cooled until it reached room temperature and the hardener MHHPA was added. The mixture was homogeneously and continuously mixed by hand for about 20 minutes. This operation was carried out at room temperature in order to avoid the triggering of the cross-linking reaction by the hardener. Subsequently, the mixture was degassed at room temperature in a vacuum oven for about 2 hours to eliminate the bubbles inside the mixture. After degassing, the mixture was cured by a three-stage curing cycle: 80°C for 1h, 120°C for 20 min and 180°C for 1 h.

### Preparation of the self-healing multifunctional epoxy matrix B (Epoxy mixture PCTH+0.42% self-healing filler) - (Sample 2B)

The epoxy mixture PCTH was obtained by adding the liquid rubber CTBN, at a concentration of 5% by wt. with respect to the total weight of all the mixture components, to the precursor ECC, kept in an oil bath at 100°C.

After having homogeneously mixed the two components for about 10 minutes, the triphenylphosphine PPh₃ was added at a concentration of 10% by wt with respect to the total weight of all the mixture components, and the temperature was raised up to 160° C. The resulting mixture was kept at 160°C for about 20 hours under magnetic stirring in an oil bath. After 20 hours, the mixture obtained was cooled until it reaches room temperature. The self-healing filler was dissolved at a molecular level in the hardener, at a concentration of 0.42% by weight with respect to the total weight of all the mixture components. Then this mixture was added to the other cooled blend and the two different mixtures were homogeneously and continuously mixed by hand for about 20 minutes.

Subsequently, the mixture was degassed at room temperature in a vacuum oven for about 2 hours and then was cured by a three-stage curing cycle: 80°C for 1h, 120°C for 20 min and 180°C for 1 h.

Hereafter, experimental methods used to evaluate the self-healing efficiency, the dynamic mechanical parameters and the temperature of the thermal degradation of the above samples are described.

### Self-healing efficiency evaluation

The self-healing efficiency η of the samples was evaluated by fracture tests.

For quasi-static fracture conditions crack healing, efficiency η is defined as the ability of a healed sample to recover fracture toughness and is defined by the following equation: 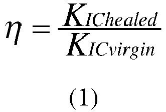 where K_{ICvirgin} is the fracture toughness of the virgin specimen and K_{IChealed} is the fracture toughness of the healed specimen. Using a protocol already established in the literature [White, S. R., Sottos, N. R., Geubelle, P. H., Moore, J. S., Kessler, M. R., Sriram, S. R., Brown, E. N. and Viswanathan, S. (2001) Autonomic healing of polymer composites. Nature, 409, 794-797; Wool, R. P., and O'Conner, K.M. (1981). A theory crack healing in polymers. J. Appl. Phys., 52, 5953], self-healing efficiency is measured by carefully controlled fracture experiments for both the virgin and the healed sample. These tests, already used successfully in literature [Guadagno, L., Raimondo, M., Naddeo, C., Longo, P., Mariconda, A. and Binder, W. H. (2014a) Healing efficiency and dynamic mechanical properties of self-healing epoxy systems. Smart Mater Struct, 23, 045001 (11 pp); Longo, P., Mariconda, A., Calabrese, E., Raimondo, M., Naddeo, C., Vertuccio, L., Russo, S., Iannuzzo, G., and Guadagno, L., (2017a) Development of a new stable ruthenium initiator suitably designed for self-repairing applications in high reactive environments. J. Ind. Eng. Chem., 54, 234-251], utilizes a TDCB geometry of the tested specimens illustrated in Figure 3, which ensures controlled crack growth along the centerline of the specimen and provides a crack length independent measure of the fracture toughness.

Healing evaluation begins with a virgin fracture test of an undamaged TDCB sample. A pre-crack is introduced to sharpen the crack-tip. The sample is then mounted on a load frame and loaded under displacement control causing the pre-crack to propagate along the centerline of the sample until failure.

The crack is then closed and allowed to heal at room temperature with no external intervention. After healing, the sample is loaded again until failure. With this geometry, the efficiency measurement simply requires knowledge of the critical fracture load, Pc, of the virgin and healed specimen according to the following equation:

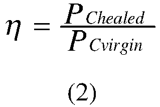

Equation 2 can be derived from equation 1 by considering that KIC = αPC, where α=11.2×103 m^{-3/2} for the TDCB used geometry. This procedure has been recognized to be very effective to measure "healing efficiency". Fracture specimens have been tested by INSTRON mod. 5967 Dynamometer under displacement control using a load cell of 30KN and a 250 mm/min displacement rate and measuring load and displacement values (see Figure 3).

Samples were loaded at first failure and then unloaded allowing the crack face to come back into contact. After sufficient time (24 h) for healing efficiency to reach a steady-state the healed samples have been tested again. Values of healing efficiency (*η*) have been calculated using equation (2), for the formulations containing both, the MWCNTs and the self-healing fillers. For all samples, only one cycle has been carried out: after the closure of the crack, the sample has been kept for 24 h and a first cycle has been performed after the healing of the sample.

### Dynamic mechanical analysis (DMA)

Dynamic mechanical analysis of the samples was performed with a dynamic mechanical thermo-analyzer (Tritec 2000 DMA-Triton Technology). Solid samples with dimensions 2×10×35 mm³ were tested by applying a variable flexural deformation in three points bending mode. The displacement amplitude was set to 0.03 mm, whereas the measurements were performed at the frequency of 1 Hz. The range of temperature was from -90 °C to 315 °C at the scanning rate of 3°C min⁻¹.

### Thermogravimetric analysis (TGA)

TGA was carried out in air using a Mettler TGA/SDTA 851 thermal analyzer. The temperature range was 25-1000°C at heating rate of 10°C min⁻¹. The weight loss was recorded as a function of the temperature.

### Results - Formulation (Sample 2A - I) - Example 1

### Evaluation of self-healing efficiency, glass transition temperature and degradation temperature

### Self-Healing Efficiency

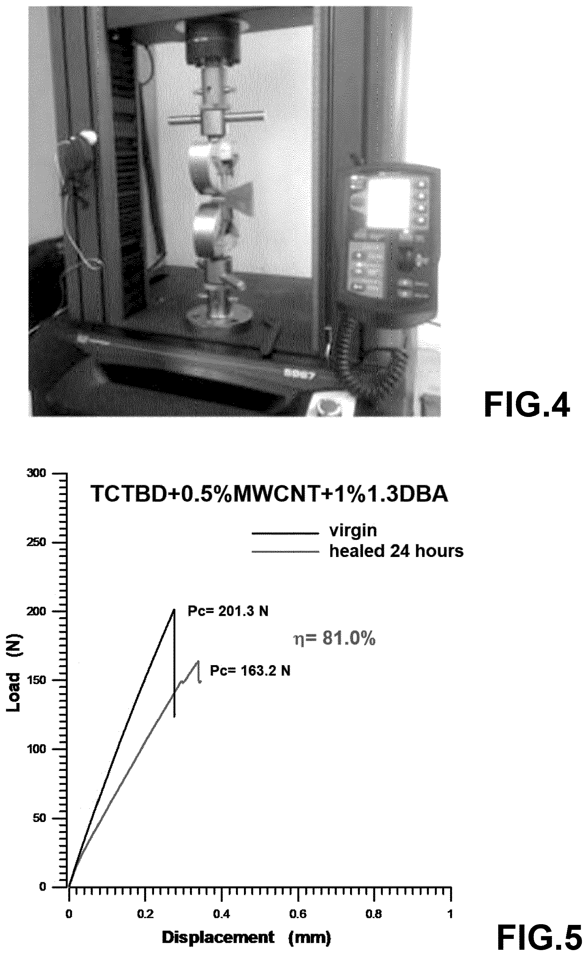

Figure 5 shows the load-displacement curves for the epoxy matrix loaded with MWCNTs and the filler 1.3 DBA.

### Dynamic mechanical analysis (DMA)

In order to fully understand the influence of the self-healing fillers on the mechanical properties of the toughened epoxy matrix filled and unfilled with MWCNTs, DMA analysis was performed.

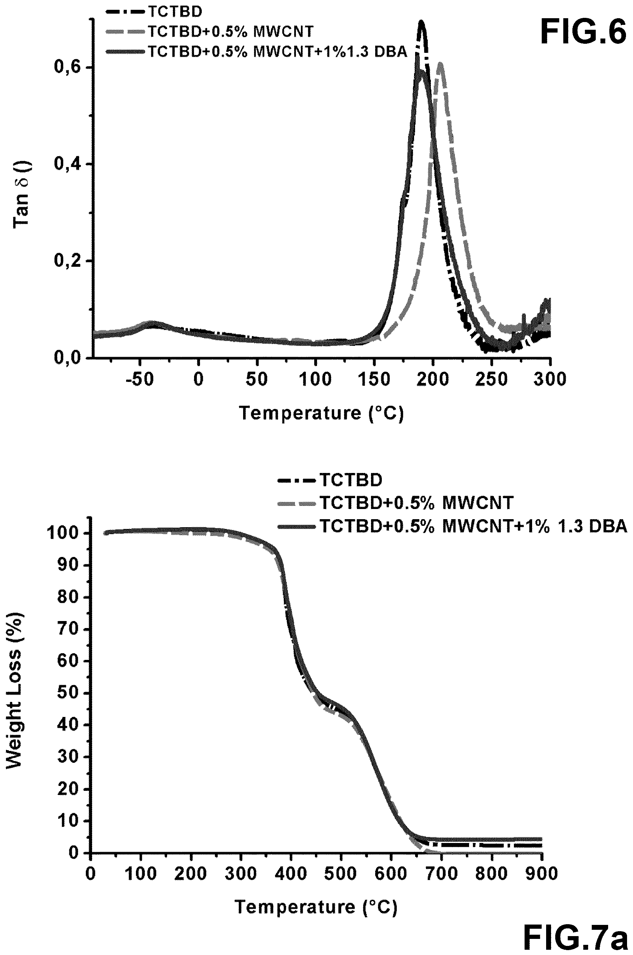

The loss factor, tan δ, of the TCTBD+0.5%MWCNT+1%1.3 DBA formulation, compared with those of the formulations TCTBD (Sample 1A) and TCTBD+0.5%MWCNT, is shown in Figure 6.

The presence of self-healing filler 1.3 DBA does not alter the value of the glass transition temperature with respect to the unfilled sample.

### Thermogravimetric analysis (TGA)

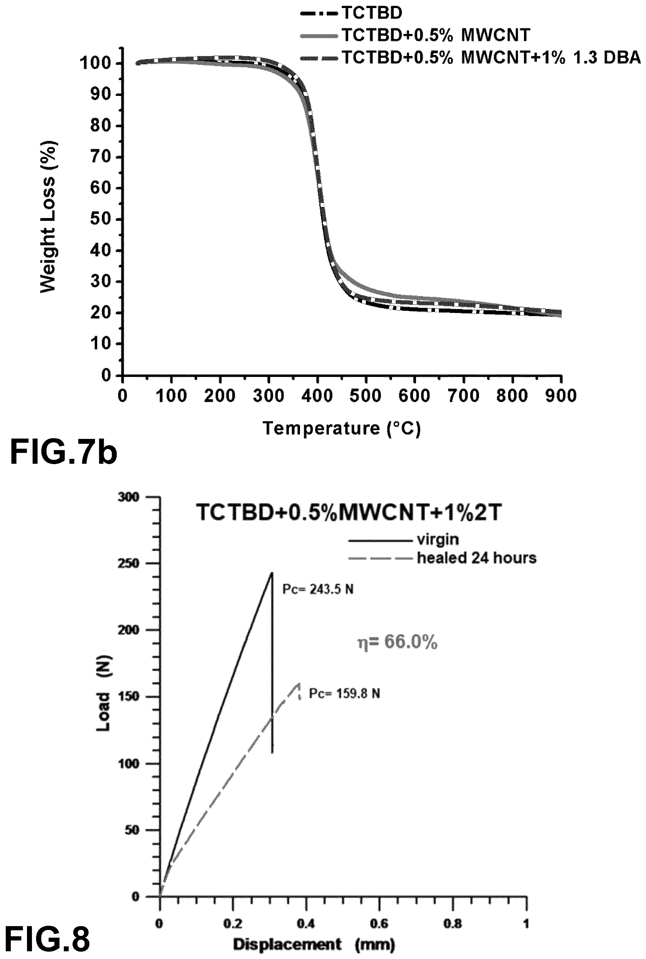

Figures 7a and 7b show TGA curves of the cured toughened epoxy mixture TCTBD and of the same epoxy mixture filled with MWCNTs and with both MWCNTs and self-healing filler 1.3 DBA, in air (see Fig. 7a) and nitrogen flow (see Fig. 7b). The beginning of the thermal degradation process, defined as 5% mass loss temperature, is around 360°C, both in air and nitrogen atmosphere.

### Results - Formulation (Sample 2A - II) - Example 2

### Evaluation of self-healing efficiency, glass transition temperature and degradation temperature

### Evaluation of self-healing efficiency

Figure 8 shows the load-displacement curves for the epoxy matrix loaded with MWCNTs and the filler 2T.

### Dynamic mechanical analysis (DMA)

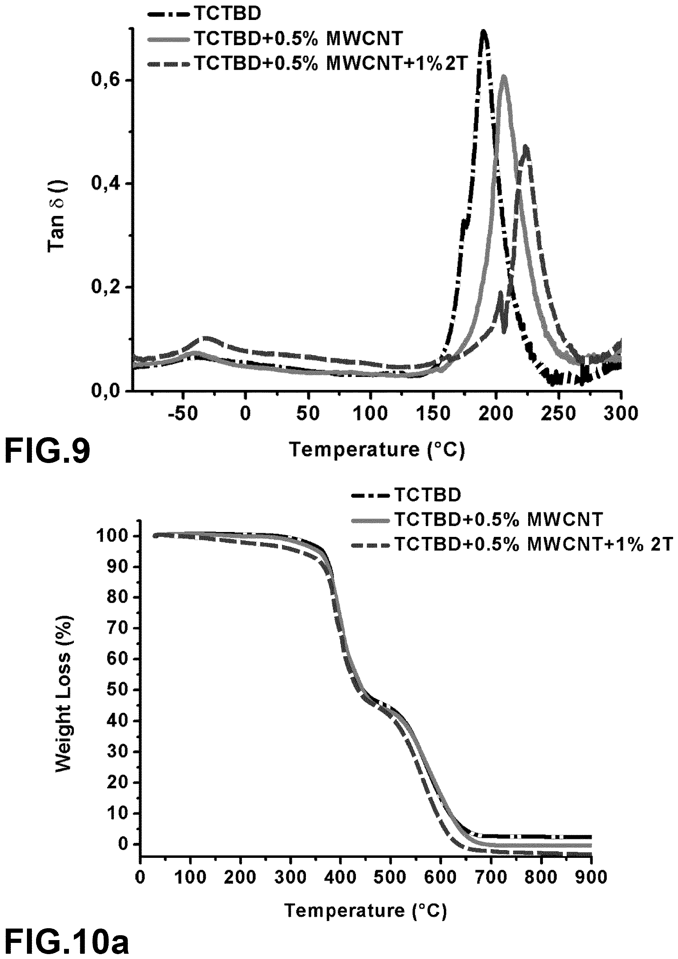

The loss factor, tan δ, of the TCTBD+0.5%MWCNT+1%2T formulation, compared with those of the formulations TCTBD and TCTBD+0.5%MWCNT, is shown in Figure 9.

The presence of self-healing filler 2T determines an increase in the value of the glass transition temperature with respect to the unfilled sample and the sample containing incorporated only MWCNTs.

The presence of the self-healing filler determines the increase of the glass transition temperature, which results higher than 200 °C. In particular, an increase from 189 °C to 223 °C, with respect to the unfilled matrix, is detected.

### Thermogravimetric analysis (TGA)

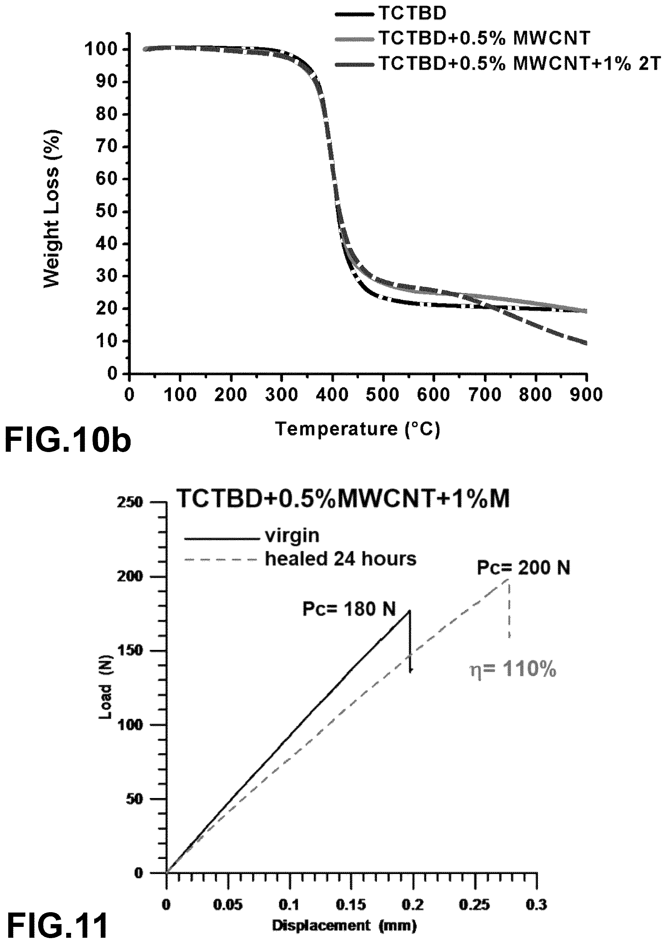

Figures 10a and 10b show TGA curves of the cured toughened epoxy mixture TCTBD and of the same epoxy mixture filled with MWCNTs and with both MWCNTs and self-healing filler 2T, in air (see Fig. 10a) and nitrogen flow (see Fig. 10b). The beginning of the thermal degradation process, defined as 5% mass loss temperature, is around 360°C, both in air and nitrogen atmosphere.

All the collected results highlight that the formulated nanocomposites are stable up to 350-360°C.

### Results - Formulation (Sample 2A - III) - Example 3

### Evaluation of self-healing efficiency, glass and degradation temperature

### Self-Healing Efficiency

Figure 11 shows the load-displacement curves for the epoxy matrix loaded with MWCNTs and filler M.

The sample with this specific matrix completely recovers the damage.

### Dynamic mechanical analysis (DMA)

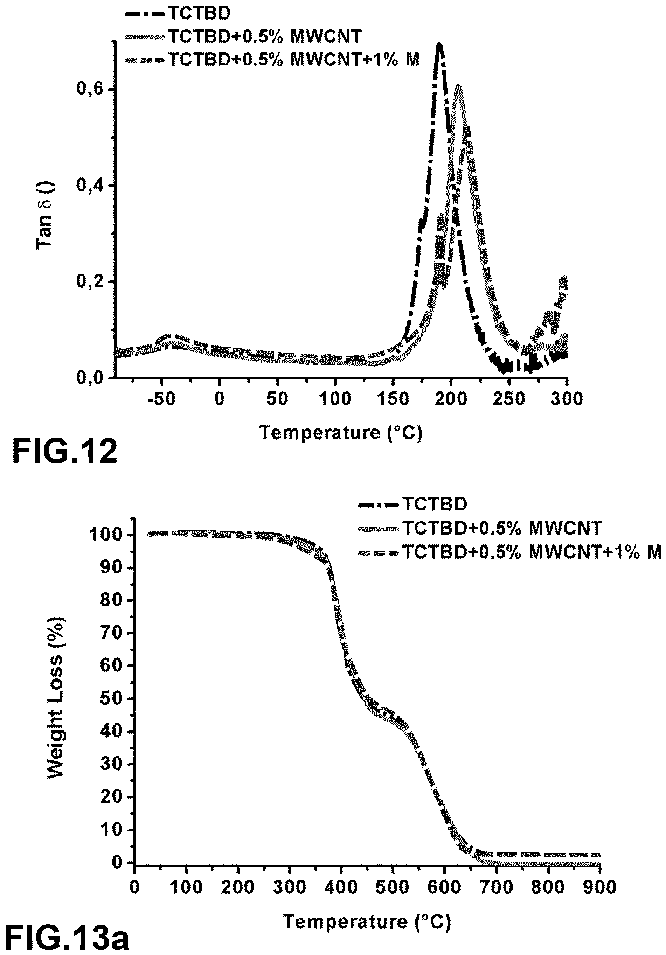

The loss factor, tan δ, of the TCTBD+0.5%MWCNT+1%M formulation, compared with those of the formulations TCTBD and TCTBD+0.5%MWCNT, is shown in Figure 12.

The presence of the self-healing filler compound determines the increase of the glass transition temperature, which results higher than 200 °C. In particular, an increase from 189 °C to 213 °C is detected with respect to the unfilled matrix.

### Thermogravimetric analysis (TGA)

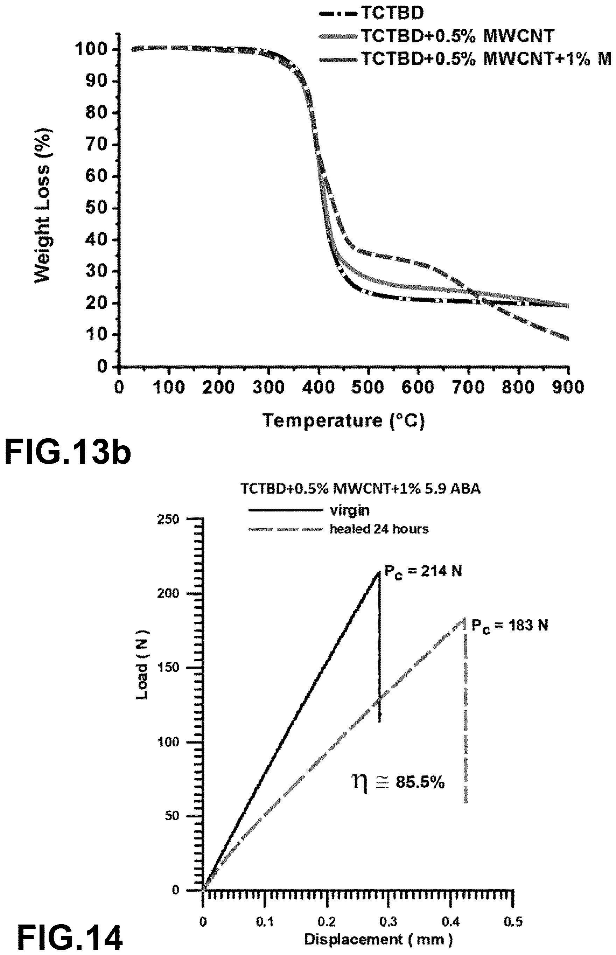

Figures 13a and 13b show TGA curves of the cured toughened epoxy mixture TCTBD and of the same epoxy mixture filled with MWCNTs and with both, MWCNTs and self-healing filler M, in air (see Fig. 13a) and nitrogen flow (see Fig. 13b). The beginning of the thermal degradation process, defined as 5% mass loss temperature, is around 360°C, both in air and nitrogen atmosphere.

### Results - Formulation (Sample 2A - IV) - Example 4

### Evaluation of self-healing efficiency and degradation temperature

### Evaluation of self-healing efficiency

Figure 14 shows the load-displacement curves for the epoxy matrix loaded with MWCNTs and filler 5.9 ABA.

The healing efficiency of the sample reaches a value of 85.5%.

### Thermogravimetric analysis (TGA)

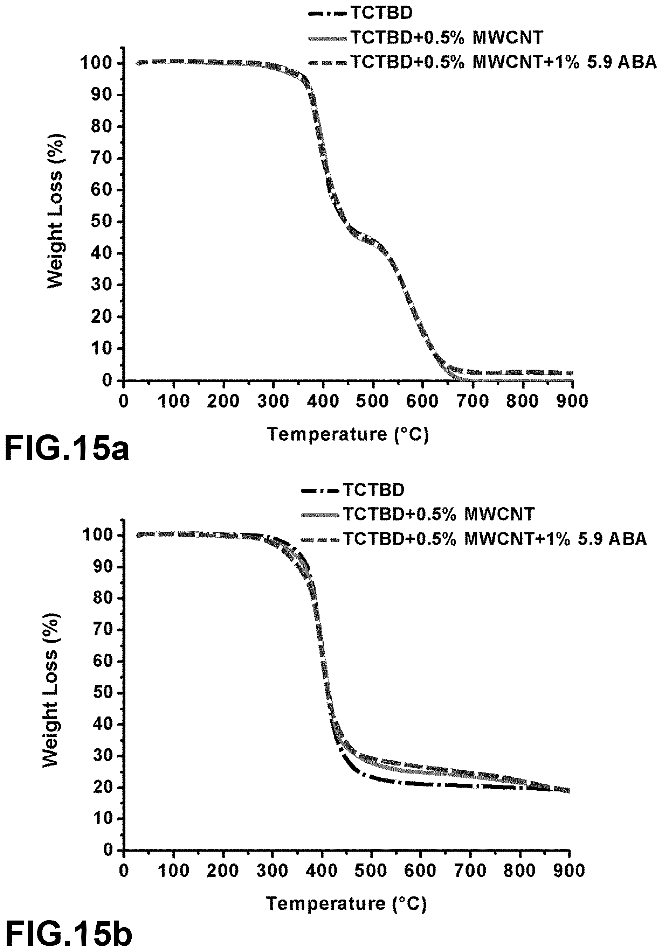

Figures 15a and 15b show TGA curves of the cured toughened epoxy mixture TCTBD and of the same epoxy mixture filled with MWCNTs and with both, MWCNTs and self-healing filler 5.9 ABA, in air (see Fig. 15a) and nitrogen flow (see Fig. 15b). The beginning of the thermal degradation process, defined as 5% mass loss temperature, is around 360°C, both in air and nitrogen atmosphere.

### Results - Formulation (Sample 2B - I) - Example 5

### Evaluation of self-healing efficiency

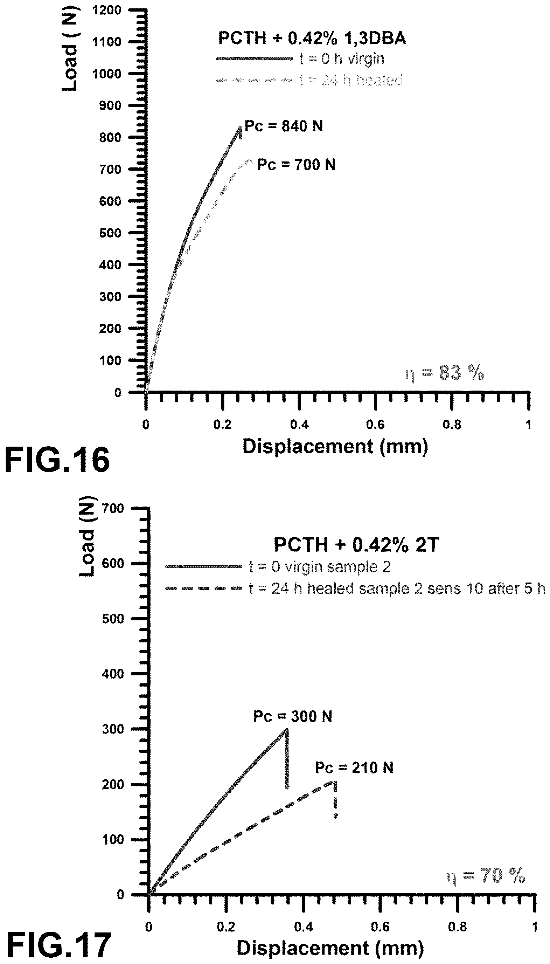

Figure 16 shows the load-displacement curves for the epoxy matrix PCTH loaded with the self-healing molecular filler 1.3 DBA.

The self-healing formulation can be used, as other previous described formulations with the incorporation of conductive nanostructured forms of carbons or to impregnate electrically conductive CFs.

### Results - Formulation (Sample 2B - II) - Example 6

### Evaluation of self-healing efficiency

Figure 17 shows the load-displacement curves for the epoxy matrix PCTH loaded with the self-healing molecular filler 2T.

### Results - Formulation (Sample 2B - III) - Example 7

### Evaluation of self-healing efficiency

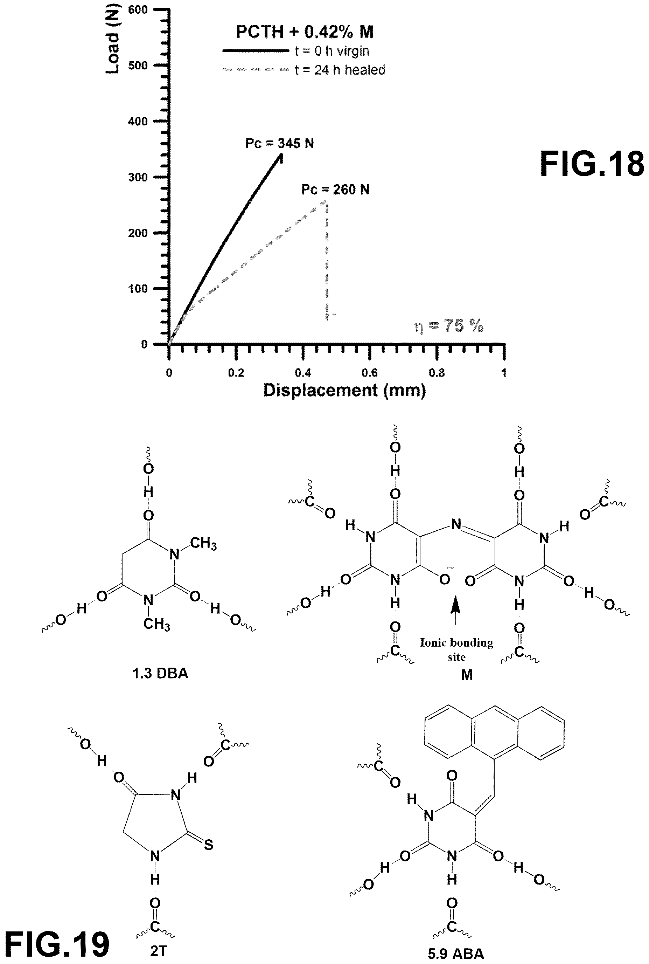

Figure 18 shows the load-displacement curves for the epoxy matrix PCTH loaded with the self-healing molecular filler M.

### Electrical properties

Electrical conductivity measurements were performed in order to evaluate the electrical behaviour of nano-charged materials according to the invention.

The measurements of the DC volume conductivity were performed by using disk-shaped specimens of about 2 mm thickness and 50 mm diameter; the measurement electrode is circular with a diameter of about 22 mm. The measurement system, remotely controlled by the software LABVIEW^{®}, is composed of a suitable shielded cell with temperature control, of multimeter Keithley 6517A with function of voltage generator (max. 1000 V) and voltmeter (max. 200 V) and the ammeter HP34401A (min. current 0.1 mA) for samples above the percolation threshold. For samples below the percolation threshold, the system is composed only of multimeter Keithley 6517A with the function of voltage generator (max. 1000 V) and pico-ammeter (min. current 0.1 fA).

The obtained values of electrical conductivity are shown in Table II

**Table (II) Values of electrical conductivity for the analyzed samples.**

| **Sample** | **Electrical Conductivity [S/m]** |
|---|---|
| **TCTBD** | 1.16x10⁻¹⁴ |
| **TCTBD+0.5%MWCNT** | 2.56 x10⁻² |
| **TCTBD+0.5%MWCNT+1%1.3DBA** | 1.15 x10⁻² |
| **TCTBD+0.5%MWCNT+1%2T** | 2.27 x10⁻⁴ |
| **TCTBD+0.5%MWCNT+1%5.9ABA** | 1.08 x10⁻¹ |
| **TCTBD+0.5%MWCNT+1%M** | 1.29 x10⁻² |

These results highlighted that the presence of the self-healing fillers in the nanofilled epoxy matrix does not decrease its electrical conductivity with respect to the matrix containing only unfunctionalized CNTs. The conductive paths in the nano-composite are not affected by the addition of self-healing fillers and the good values of electrical conductivity, together with the promising results of self-healing efficiency tests, confirm the success of this strategic approach aimed at proposing multifunctional load-bearing composite materials with self-healing ability.

It is worth noting that multifunctional self-healing polymer matrices containing the same amount of CNTs functionalized with hydrogen bonding moieties (to activate self-healing mechanisms) manifest higher EPT, because the functionalization procedure of the nanofiller reduces their electronic performance.

### General Considerations

Figure 19 shows the chemical formulae of four analyzed molecular fillers, highlighting the sites that can establish non-covalent reversible attractive interactions with the matrix and between them, in particular with the carbonyl and hydroxyl groups of the toughened epoxy matrix or other matrices containing polar groups able to form hydrogen bonds.

These data highlight that there is a synergistic action between the different components, possibly generating a supramolecular network able to activate self-healing mechanisms. Furthermore, samples containing MWCNT (or other conductive nanostructured forms of carbon) and self-healing fillers tend to create a phase with increased mobility of the chains. This particular phase arrangement could be responsible for better promoting reversible hydrogen bonds determined by the interaction between the epoxy matrix and self-healing fillers. The presence of a more mobile phase in the formulation can be beneficial for enhancing the self-healing efficiency of the composite material.

## Claims

1. Multifunctional composite material comprising a polymeric matrix filled with electrically conductive nanoparticles combined with a self-healing molecular filler selected in the group consisting of molecules and oligomers containing groups acting as donors and acceptors of hydrogen bonds,
wherein said self-healing molecular filler is one of the following compounds 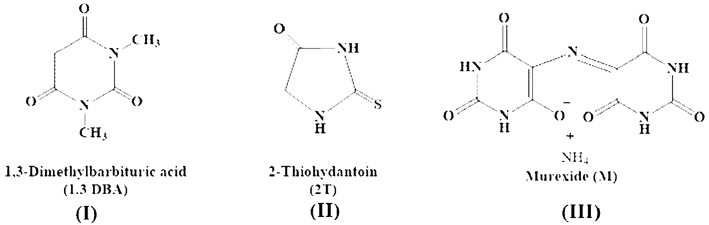 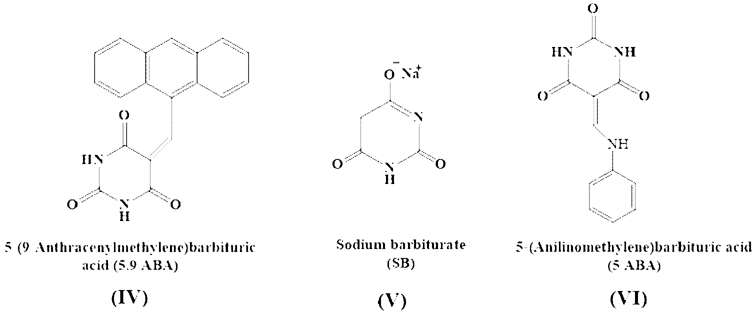 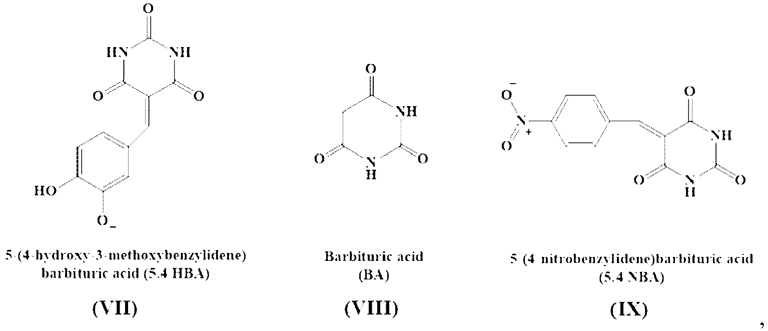 and
wherein said conductive nanoparticles are selected in the group consisting of carbon nanotubes, carbon nanofibers, exfoliated graphite nanoparticles, expanded graphite nanoparticles, graphene-based nanoparticles and mixtures thereof.

2. A material according to claim 1, wherein said polymeric matrix is an epoxy matrix.

## Patentansprüche

1. Multifunktionelles Verbundmaterial mit einer Polymermatrix, die mit elektrisch leitenden Nanopartikeln kombiniert mit einem selbstheilenden molekularen Füllmaterial, das in der Gruppe ausgewählt ist, die aus Molekülen und Oligomeren besteht, die Gruppen enthalten, die als Donoren und Akzeptoren von Wasserstoffbindungen wirken, gefüllt ist,
bei dem das selbstheilende molekulare Füllmaterial eine der folgenden Verbindungen ist 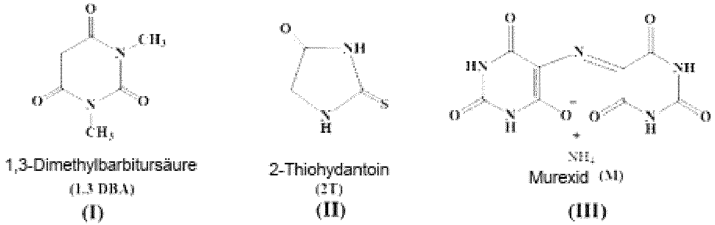 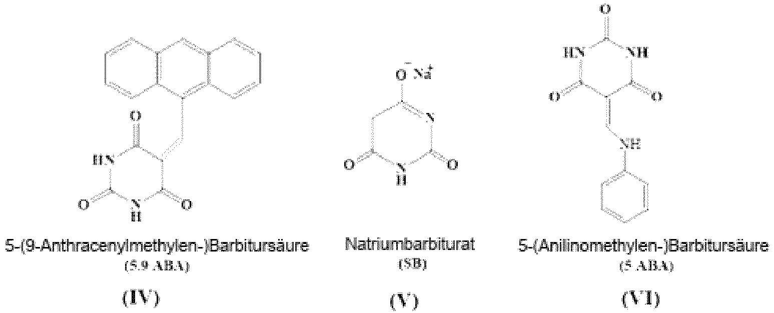 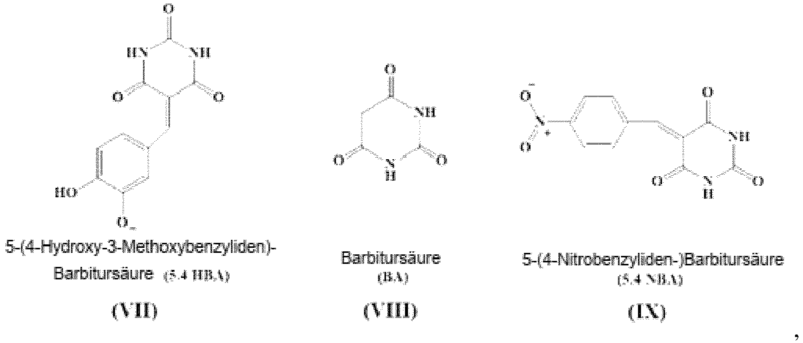 und
bei dem die leitenden Nanopartikel in der Gruppe ausgewählt sind, die aus Kohlenstoffnanoröhrchen, Kohlenstoffnanofasern, abgeblätterten Graphitnanopartikeln, expandierten Graphitnanopartikeln, Nanopartikeln auf Graphenbasis und Mischungen davon besteht.

2. Material nach Anspruch 1, bei dem die Polymermatrix eine Epoxidmatrix ist.

## Revendications

1. Matériau composite multifonctionnel comprenant une matrice polymère remplie de nanoparticules électriquement conductrices combinées à une charge moléculaire autorégénérante choisie dans le groupe composé de molécules et d'oligomères contenant des groupes qui agissent en tant que donneurs et accepteurs de liaisons hydrogène,
dans lequel ladite charge moléculaire autorégénérante est l'un des composés suivants 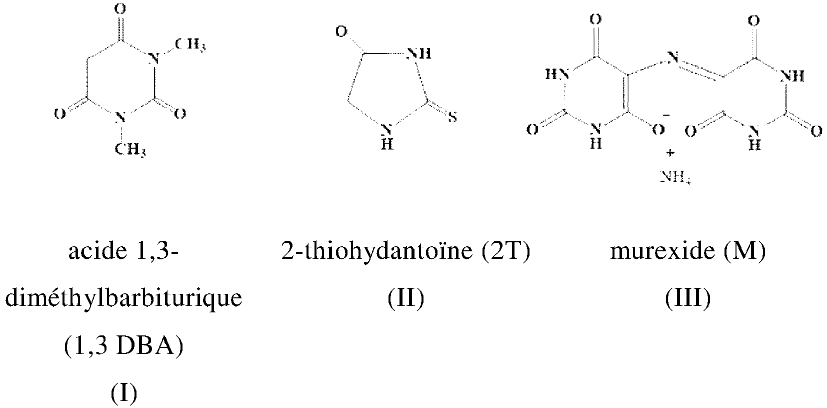 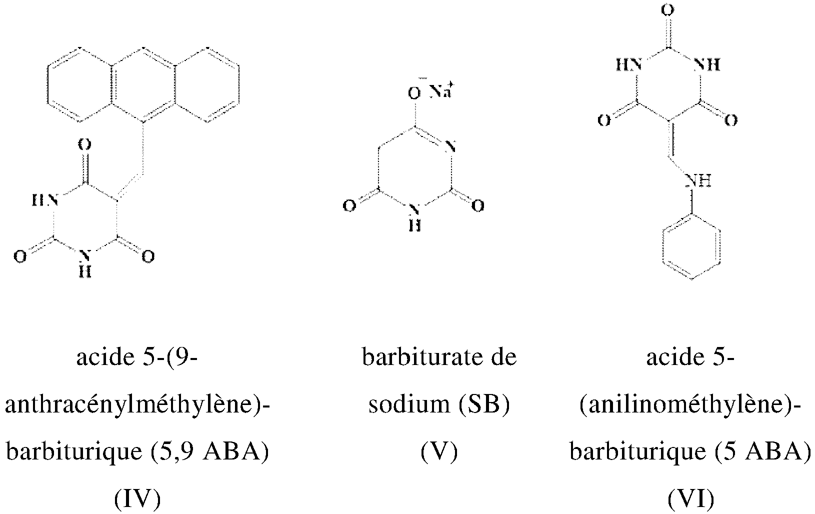 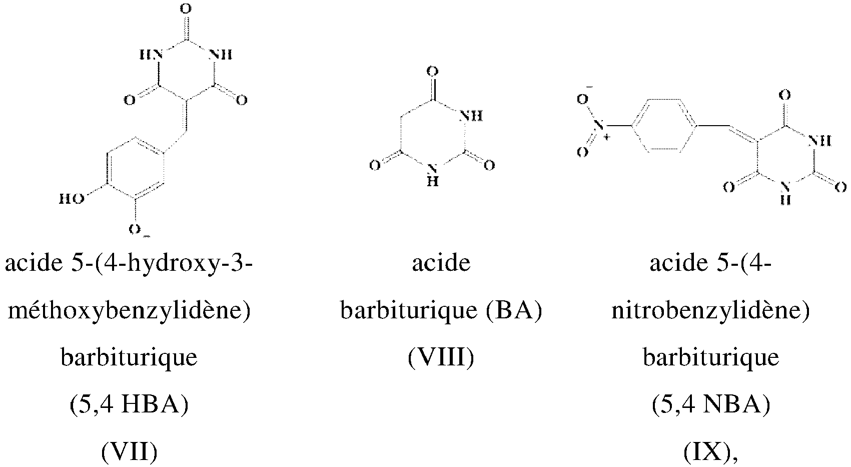
et dans lequel lesdites nanoparticules conductrices sont choisies dans le groupe composé de nanotubes de carbone, de nanofibres de carbone, de nanoparticules de graphite exfolié, de nanoparticules de graphite expansé, de nanoparticules à base de graphène et de mélanges de ceux-ci.

2. Matériau selon la revendication 1, dans lequel ladite matrice polymère est une matrice époxy.
